(19)

Europäisches
Patentamt
European
Patent Office
Office européen
des brevets

(11) **EP 2 896 652 A1**

(12) **EUROPEAN PATENT APPLICATION**
published in accordance with Art. 153(4) EPC

(43) Date of publication:
**22.07.2015 Bulletin 2015/30**

(21) Application number: **13837082.0**

(22) Date of filing: **11.09.2013**

(51) Int Cl.:
**C08L 33/10** (2006.01)   **C08F 265/06** (2006.01)
**C08J 5/18** (2006.01)   **C08J 7/04** (2006.01)
**C08L 51/04** (2006.01)   **G02B 1/10** (2015.01)
**G02B 5/30** (2006.01)

(86) International application number:
**PCT/JP2013/005391**

(87) International publication number:
**WO 2014/041803 (20.03.2014 Gazette 2014/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **13.09.2012   JP 2012202131**

(71) Applicant: **Kaneka Corporation
Osaka-shi, Osaka 530-8288 (JP)**

(72) Inventors:
• **KOYAMA, Haruki
Osaka 566-0072 (JP)**
• **YAMADA, Hirotsugu
Hyogo 676-8688 (JP)**
• **KITAYAMA, Fuminobu
Hyogo 676-8688 (JP)**
• **YAMAGUCHI, Katsumi
Osaka 566-0072 (JP)**

(74) Representative: **Vossius & Partner
Patentanwälte Rechtsanwälte mbB
Siebertstrasse 3
81675 München (DE)**

(54) **ACRYLIC RESIN FILM**

(57)    Disclosed herein is a film that exhibits well-balanced physical properties such as high surface hardness, excellent transparency, excellent cracking resistance, and excellent anti-whitening on bending when laminated on a plastic molded body, and is therefore suitable for decorative molding applications. The film is an acrylic resin film obtained by forming, into a film, an acrylic resin composition containing an acrylic resin and a rubber-containing graft copolymer, the rubber-containing graft copolymer being obtained by polymerizing monomer components (B-1) to (B-4) in order so that rubber particles obtained by polymerizing (B-1) to (B-3) have an average particle size of 0.2 to 0.4 $\mu$m. The monomer component (B-1) comprises 40 to 100 wt% of an acrylate, 60 to 0 wt% of a monofunctional monomer copolymerizable therewith, and 0.05 to 10 parts by weight of a polyfunctional monomer. The monomer component (B-2) comprises 50 to 100 wt% of a methacrylate, 50 to 0 wt% of a monofunctional monomer copolymerizable therewith, and 0.05 to 10 parts by weight of a polyfunctional monomer. The monomer component (B-3) comprises 50 to 100 wt% of an acrylate, 50 to 0 wt% of a monofunctional monomer copolymerizable therewith, and 0.05 to 10 parts by weight of a polyfunctional monomer. The monomer component (B-4) comprises 40 to 100 wt% of a methacrylate and 60 to 0 wt% of a monofunctional monomer copolymerizable therewith.

EP 2 896 652 A1

**Description**

Technical Field

The present invention relates to an acrylic resin film.

Background Art

Acrylic resin film obtained by processing and molding an acrylic resin composition containing a cross-linked elastomer is used in and developed for various applications for its transparency and hardness. Examples of the application of such acrylic resin film include alternatives to painting to be laminated on interior or exterior car parts, exterior materials for home appliances such as mobile phones and personal computers, and floor materials for buildings. As a method for decorating a plastic surface, there is a film in-mold molding method in which a film, such as an acrylic resin film, previously subjected to or not subjected to vacuum molding or the like is inserted into an injection mold and a base resin is injected into the mold.

Various acrylic films suitable for such an application have been proposed. For example, a method is known in which the reduced viscosity of a plastic polymer and the particle size and rubber content of a rubber-containing polymer are specified (Patent Document 1), and a method is known in which the reduced viscosity of an acrylic polymer and the amount of a multi-layer acrylic polymer contained are specified (Patent Documents 2 and 3). It is known that films obtained by these methods are excellent in surface hardness, transparency, and film moldability.

Further, a method has been proposed in which two kinds of rubbers are blended to obtain an acrylic resin film having excellent solvent resistance and transparency (Patent Document 5). Further, a method has been proposed in which two kinds of rubbers are blended to obtain an acrylic resin film that can maintain its excellent appearance without whitening even when heated during molding (Patent Document 6).

When a film is laminated on a molded article having a complicated shape, there is a problem that the film is likely to whiten due to the concentration of stress on the corners or the like of the molded article (film whitening on bending), which significantly reduces the commercial value of the molded article. However, in the above Patent Documents, there is no description about the problem of film whitening on bending. Of course, there is no description about the balance of physical properties such as anti-whitening on bending, cracking resistance, and surface hardness, either.

As a method for forming a film having improved resistance to whitening on bending (hereinafter, also referred to as anti-whitening on bending), a method is known in which a relationship between the degree of cross-linking and particle size of a cross-linked elastomer is specified (Patent Document 4). However, a film formed by this method has a problem that its anti-whitening on bending is excellent but its balance of physical properties such as anti-whitening on bending, cracking resistance, and surface hardness is not optimized.

PRIOR ART DOCUMENTS

Patent Documents

Patent Document 1: JP-A-8-323934
Patent Document 2: JP-A-10-279766
Patent Document 3: JP-A-10-306192
Patent Document 4: Japanese Patent No. 4291994
Patent Document 5: JP-A-2002-309059
Patent Document 6: Japanese Patent No. 3835275

DISCLOSURE OF THE INVENTION

Problems to be Solved by the Invention

An object of the present invention is to provide a film that is less likely to whiten on bending when laminated on a plastic molded body or the like, has well-balanced physical properties such as high surface hardness, excellent transparency, and excellent cracking resistance, and is suitable for decorative molding applications and/or optical applications.

Means for Solving the Problems

The present inventors have intensively studied, and as a result, have found that the above object can be achieved by providing a film obtained by molding a resin composition containing an acrylic resin and a certain rubber-containing graft copolymer, which has led to the completion of the present invention.

Specifically, the present invention is directed to an acrylic resin film obtained by forming, into a film, an acrylic resin composition (D) containing an acrylic resin (A) and a rubber-containing graft copolymer (B),

the rubber-containing graft copolymer (B)

being obtained by polymerizing monomer components (B-1) to (B-4) in order so that rubber particles as a polymerization product of (B-1), (B-2), and (B-3) have an average particle size of 0.2 to 0.4 $\mu$m,

the monomer component (B-1) comprising 40 to 100 wt% of an acrylate (b-1-1), 60 to 0 wt% of a monofunctional monomer (b-1-2) copolymerizable therewith, and 0.05 to 10 parts by weight of a polyfunctional monomer (b-1-3) (with respect to 100 parts by weight of (b-1-1) + (b-1-2)),

the monomer component (B-2) comprising 50 to 100 wt% of a methacrylate (b-2-1), 50 to 0 wt% of a monofunctional monomer (b-2-2) copolymerizable therewith, and 0.05 to 10 parts by weight of a polyfunctional monomer (b-2-3) (with respect to 100 parts by weight of (b-2-1) + (b-2-2)),

the monomer component (B-3) comprising 50 to 100 wt% of an acrylate (b-3-1), 50 to 0 wt% of a monofunctional monomer (b-3-2) copolymerizable therewith, and 0.05 to 10 parts by weight of a polyfunctional monomer (b-3-3) (with respect to 100 parts by weight of (b-3-1) + (b-3-2)), and

the monomer component (B-4) comprising 40 to 100 wt% of a methacrylate (b-4-1) and 60 to 0 wt% of a monofunctional monomer (b-4-2) copolymerizable therewith.

In the acrylic resin film according to the present invention, the acrylic resin composition (D) preferably contains 1 to 30 parts by weight of the rubber particles (polymerization product of the monomer components (B-1) + (B-2) + (B-3)) of the rubber-containing graft copolymer (B) per 100 parts by weight of the acrylic resin composition (D).

In the acrylic resin film according to the present invention, the acrylic resin composition (D) preferably further contains a rubber-containing graft copolymer (C),

the rubber-containing graft copolymer (C)

being obtained by polymerizing monomer components (C-1) and (C-2) in order so that rubber particles as a polymerization product of (C-1) have an average particle size of 0.02 to 0.15 $\mu$m,

the monomer component (C-1) comprising 50 to 100 wt% of an acrylate (c-1-1), 50 to 0 wt% of a methacrylate (c-1-2), and 0.05 to 10 parts by weight of a polyfunctional monomer (c-1-3) (with respect to 100 parts by weight of (c-1-1) + (c-1-2)), and

the monomer component (C-2) comprising 50 to 100 wt% of a methacrylate (c-2-1) and 50 to 0 wt% of a monofunctional monomer (c-2-2) copolymerizable therewith.

In the acrylic resin film according to the present invention, the acrylic resin composition (D) preferably contains 1 to 30 parts by weight of the rubber particles (polymerization product of the monomer components (B-1) + (B-2) + (B-3)) of the rubber-containing graft copolymer (B) and 1 to 50 parts by weight of the rubber particles (polymerization product of the monomer component (C-1)) of the rubber-containing graft copolymer (C), per 100 parts by weight of the acrylic resin composition (D).

The acrylic resin film according to the present invention preferably has a film thickness of 30 to 500 $\mu$m.

The acrylic resin film according to the present invention preferably has a coating layer on its at least one surface.

The acrylic resin film according to the present invention preferably has a hard coat layer on its one surface and has a primer layer on its surface opposite to the one surface.

When the acrylic resin film according to the present invention has a hard coat layer, the hard coat layer preferably has a pencil hardness of HB or higher.

The present invention is also directed to a laminate comprising a base material and the acrylic resin film according to the present invention laminated on the base material.

The acrylic resin film according to the present invention can be used as an optical film.

The acrylic resin film according to the present invention can be used as a polarizer protective film.

Effects of the Invention

The acrylic resin film according to the present invention has excellent anti-whitening on bending, high surface hardness, excellent cracking resistance, and excellent transparency.

PREFERRED MODE FOR CARRYING OUT THE INVENTION

A rubber-containing graft copolymer (B) used in the present invention is obtained by first polymerizing a monomer component (B-1) to obtain an innermost-layer polymer. The monomer component (B-1) used in the present invention comprises 40 to 100 wt% of an acrylate (b-1-1), 60 to 0 wt% of a monofunctional monomer (b-1-2) copolymerizable therewith, and 0.05 to 10 parts by weight of a polyfunctional monomer (b-1-3) (with respect to 100 parts by weight of (b-1-1) + (b-1-2)). The polymerization of the monomer component (B-1) may be performed by using a mixture of all the monomers or may be performed in two or more stages by changing the composition of the monomers.

The acrylate (b-1-1) used here is preferably an alkyl acrylate. From the viewpoint of polymerizability and cost, the alkyl acrylate is preferably one having a linear or branched alkyl group containing 1 to 12 carbon atoms. Specific examples of such an alkyl acrylate include methyl acrylate, ethyl acrylate, propyl acrylate, n-butyl acrylate, isobutyl acrylate, t-butyl acrylate, 2-ethylhexyl acrylate, n-octyl acrylate, β-hydroxyethyl acrylate, dimethylaminoethyl acrylate, glycidyl acrylate, acrylamide, and N-methylol acrylamide. These monomers may be used singly or in combination of two or more of them. The ratio of the amount of the acrylate (b-1-1) to the total amount of (b-1-1) and (b-1-2) is preferably 40 to 100 wt%, more preferably 50 to 100 wt%, most preferably 60 to 100 wt%. If the weight ratio of the acrylate (b-1-1) is less than 40 wt%, a resulting film is undesirably poor in cracking resistance.

Further, if necessary, the acrylate (b-1-1) may be copolymerized with the monofunctional monomer (b-1-2) copolymerizable therewith. An ethylene-based unsaturated monomer copolymerizable with the acrylate (b-1-1) is, for example, a methacrylate, preferably an alkyl methacrylate. From the viewpoint of polymerizability and cost, the alkyl methacrylate is preferably one having a linear or branched alkyl group containing 1 to 12 carbon atoms. Specific examples of such an alkyl methacrylate include methyl methacrylate, ethyl methacrylate, propyl methacrylate, butyl methacrylate, 2-ethylhexyl methacrylate, octyl methacrylate, methacrylamide, β-hydroxyethyl methacrylate, dimethylaminoethyl methacrylate, and glycidyl methacrylate. Other examples of the ethylene-based unsaturated monomer include: vinyl halides such as vinyl chloride and vinyl bromide; vinyl cyanides such as acrylonitrile and methacrylonitrile; vinyl esters such as vinyl formate, vinyl acetate, and vinyl propionate; aromatic vinyl derivatives such as styrene, vinyl toluene, and α-methylstyrene; vinylidene halides such as vinylidene chloride and vinylidene fluoride; acrylic acid and salts thereof such as acrylic acid, sodium acrylate, and calcium acrylate; and methacrylic acid and salts thereof such as methacrylic acid, sodium methacrylate, and calcium methacrylate. These monomers may be used in combination of two or more of them. The ratio of the amount of the monofunctional monomer (b-1-2) copolymerizable with the acrylate (b-1-1) to the total amount of (b-1-1) and (b-1-2) is preferably 0 to 60 wt%, more preferably 0 to 50 wt%, most preferably 0 to 40 wt%. If the weight ratio of the monofunctional monomer (b-1-2) exceeds 60 wt%, a resulting film is undesirably poor in cracking resistance.

The monomer component (B-1) contains the polyfunctional monomer (b-1-3) having two or more non-conjugated reactive double bonds per molecule, and therefore the obtained polymer is a cross-linked polymer. Examples of the polyfunctional monomer (b-1-3) used here include allyl methacrylate, allyl acrylate, triallyl cyanurate, triallyl isocyanurate, diallyl phthalate, diallyl maleate, divinyl adipate, divinylbenzene ethylene glycol dimethacrylate, divinylbenzene ethylene glycol diacrylate, diethylene glycol dimethacrylate, diethylene glycol diacrylate, triethylene glycol dimethacrylate, triethylene glycol diacrylate, trimethylol propane trimethacrylate, trimethylol propane triacrylate, tetramethylol methane tetramethacrylate, tetramethylol methane tetraacrylate, dipropylene glycol dimethacrylate, and dipropylene glycol diacrylate. These monomers may be used in combination of two or more of them.

The amount of the polyfunctional monomer (b-1-3) contained in the monomer component (B-1) is preferably 0.05 to 10 parts by weight, more preferably 0.1 to 10 parts by weight with respect to 100 parts by weight of (b-1-1) + (b-1-2). If the polyfunctional monomer (b-1-3) content is less than 0.05 part by weight, there is a tendency that a cross-linked polymer cannot be formed. If the polyfunctional monomer (b-1-3) content exceeds 10 parts by weight, a resulting film tends to have low cracking resistance.

Then, a monomer component (B-2) was polymerized in the presence of the innermost-layer polymer (polymerization product of (B-1)). The monomer component (B-2) used in the present invention comprises 50 to 100 wt% of a methacrylate (b-2-1), 50 to 0 wt% of a monofunctional monomer (b-2-2) copolymerized therewith, and 0.05 to 10 parts by weight of a polyfunctional monomer (b-2-3) (with respect to 100 parts by weight of (b-2-1) + (b-2-2)). The polymerization of the monomer component (B-2) may be performed by using a mixture of all the monomers or may be performed in two or more stages by changing the composition of the monomers. The methacrylate (b-2-1) used here is preferably an alkyl methacrylate. From the viewpoint of polymerizability and cost, the alkyl methacrylate is preferably one having a linear or branched alkyl group containing 1 to 12 carbon atoms. Specific examples of such an alkyl methacrylate include methyl methacrylate, ethyl methacrylate, propyl methacrylate, butyl methacrylate, 2-ethylhexyl methacrylate, octyl methacrylate, methacrylamide, β-hydroxyethyl methacrylate, dimethylaminoethyl methacrylate, and glycidyl methacrylate.

The ratio of the amount of the methacrylate (b-2-1) to the total amount of (b-2-1) and (b-2-2) is preferably 50 to 100 wt%, more preferably 60 to 100 wt%, most preferably 70 to 100 wt%. If the weight ratio of the methacrylate (b-2-1) is less than 50 wt%, a resulting film undesirably has low surface hardness.

Further, if necessary, the methacrylate (b-2-1) may be copolymerized with the monofunctional monomer (b-2-2) copolymerizable therewith. An ethylene-based unsaturated monomer copolymerizable with the methacrylate (b-2-1) is, for example, an acrylate, preferably an alkyl acrylate. From the viewpoint of polymerizability and cost, the alkyl acrylate is preferably one having a linear or branched alkyl group containing 1 to 12 carbon atoms. Specific examples of such an alkyl acrylate include methyl acrylate, ethyl acrylate, propyl acrylate, n-butyl acrylate, isobutyl acrylate, t-butyl acrylate, 2-ethylhexyl acrylate, n-octyl acrylate, β-hydroxyethyl acrylate, dimethylaminoethyl acrylate, glycidyl acrylate, acrylamide, and N-methylol acrylamide. Other examples of the ethylene-based unsaturated monomer include: vinyl halides such as vinyl chloride and vinyl bromide; vinyl cyanides such as acrylonitrile and methacrylonitrile; vinyl esters such as vinyl formate, vinyl acetate, and vinyl propionate; aromatic vinyl derivatives such as styrene, vinyl toluene, and α-methylstyrene; vinylidene halides such as vinylidene chloride and vinylidene fluoride; acrylic acid and salts thereof such as acrylic acid, sodium acrylate, and calcium acrylate; and methacrylic acid and salts thereof such as methacrylic acid, sodium methacrylate, and calcium methacrylate. These monomers may be used singly or in combination of two or more of them. The ratio of the amount of the monofunctional monomer (b-2-2) copolymerizable with the methacrylate (b-2-1) to the total amount of (b-2-1) and (b-2-2) is preferably 0 to 50 wt%, more preferably 0 to 40 wt%, most preferably 0 to 30 wt%. If the weight ratio of the monofunctional monomer (b-2-2) exceeds 50 wt%, a resulting film undesirably has low surface hardness.

The monomer component (B-2) contains the polyfunctional monomer (b-2-3) having two or more non-conjugated reactive double bonds per molecule, and therefore a cross-linked polymer is obtained. Examples of the polyfunctional monomer (b-2-3) used here include allyl methacrylate, allyl acrylate, triallyl cyanurate, triallyl isocyanurate, diallyl phthalate, diallyl maleate, divinyl adipate, divinylbenzene ethylene glycol dimethacrylate, divinylbenzene ethylene glycol diacrylate, diethylene glycol dimethacrylate, diethylene glycol diacrylate, triethylene glycol dimethacrylate, triethylene glycol diacrylate, trimethylol propane trimethacrylate, trimethylol propane triacrylate, tetramethylol methane tetramethacrylate, tetramethylol methane tetraacrylate, dipropylene glycol dimethacrylate, and dipropylene glycol diacrylate. These monomers may be used in combination of two or more of them.

The amount of the polyfunctional monomer (b-2-3) contained in the monomer component (B-2) is preferably 0.05 to 10 parts by weight, more preferably 0.1 to 10 parts by weight with respect to 100 parts by weight of (b-2-1) + (b-2-2). If the polyfunctional monomer (b-2-3) content is less than 0.05 part by weight, there is a tendency that a cross-linked polymer cannot be formed. If the polyfunctional monomer (b-2-3) content exceeds 10 parts by weight, a resulting film tends to have low cracking resistance.

Then, a monomer component (B-3) is polymerized in the presence of the polymer (polymerization product of (B-1) + (B-2)) to obtain rubber particles. The monomer component (B-3) used in the present invention comprises 50 to 100 wt% of an acrylate (b-3-1), 50 to 0 wt% of a monofunctional monomer (b-3-2) copolymerizable therewith, and 0.05 to 10 parts by weight of a polyfunctional monomer (b-3-3) (with respect to 100 parts by weight of (b-3-1) + (b-3-2)). The polymerization of the monomer component (B-3) may be performed by using a mixture of all the monomers or may be performed in two or more stages by changing the composition of the monomers.

The acrylate (b-3-1) used here is preferably an alkyl acrylate. From the viewpoint of polymerizability and cost, the alkyl acrylate is preferably one having a linear or branched alkyl group containing 1 to 12 carbon atoms. Specific examples of such an alkyl acrylate include methyl acrylate, ethyl acrylate, propyl acrylate, n-butyl acrylate, isobutyl acrylate, t-butyl acrylate, 2-ethylhexyl acrylate, n-octyl acrylate, β-hydroxyethyl acrylate, dimethylaminoethyl acrylate, glycidyl acrylate, acrylamide, and N-methylol acrylamide. These monomers may be used singly or in combination of two or more of them. The ratio of the amount of the acrylate (b-3-1) to the total amount of (b-3-1) + (b-3-2) is preferably 50 to 100 wt%, more preferably 60 to 100 wt%, most preferably 70 to 100 wt%. If the weight ratio of the acrylate (b-3-1) is less than 50 wt%, a resulting film is undesirably poor in cracking resistance.

Further, if necessary, the acrylate (b-3-1) may be copolymerized with the monofunctional monomer (b-3-2) copolymerizable therewith. An ethylene-based unsaturated monomer copolymerizable with the acrylate (b-3-1) is, for example, a methacrylate, preferably an alkyl methacrylate. From the viewpoint of polymerizability and cost, the alkyl methacrylate is preferably one having a linear or branched alkyl group containing 1 to 12 carbon atoms. Specific examples of such an alkyl methacrylate include methyl methacrylate, ethyl methacrylate, propyl methacrylate, butyl methacrylate, 2-ethylhexyl methacrylate, octyl methacrylate, methacrylamide, β-hydroxyethyl methacrylate, dimethylaminoethyl methacrylate, and glycidyl methacrylate. Other examples of the ethylene-based unsaturated monomer include: vinyl halides such as vinyl chloride and vinyl bromide; vinyl cyanides such as acrylonitrile and methacrylonitrile; vinyl esters such as vinyl formate, vinyl acetate, and vinyl propionate; aromatic vinyl derivatives such as styrene, vinyl toluene, and α-methylstyrene; vinylidene halides such as vinylidene chloride and vinylidene fluoride; acrylic acid and salts thereof such as acrylic acid, sodium acrylate, and calcium acrylate; and methacrylic acid and salts thereof such as methacrylic acid, sodium methacrylate, and calcium methacrylate. These monomers may be used in combination of two or more of them. The ratio of the amount of the monofunctional monomer (b-3-2) copolymerizable with the acrylate (b-3-1) to the total amount of (b-3-1) and (b-3-2) is preferably 0 to 50 wt%, more preferably 0 to 40 wt%, most preferably 0 to 30 wt%. If the weight ratio of the monofunctional monomer (b-3-2) exceeds 50 wt%, a resulting film is undesirably poor in cracking resistance.

The monomer component (B-3) contains the polyfunctional monomer (b-3-3) having two or more non-conjugated reactive double bonds per molecule, and therefore a cross-linked polymer is obtained. Examples of the polyfunctional monomer (b-3-3) used here include allyl methacrylate, allyl acrylate, triallyl cyanurate, triallyl isocyanurate, diallyl phthalate, diallyl maleate, divinyl adipate, divinylbenzene ethylene glycol dimethacrylate, divinylbenzene ethylene glycol diacrylate, diethylene glycol dimethacrylate, diethylene glycol diacrylate, triethylene glycol dimethacrylate, triethylene glycol diacrylate, trimethylol propane trimethacrylate, trimethylol propane triacrylate, tetramethylol methane tetramethacrylate, tetramethylol methane tetraacrylate, dipropylene glycol dimethacrylate, and dipropylene glycol diacrylate. These monomers may be used in combination of two or more of them.

The amount of the polyfunctional monomer (b-3-3) contained in the monomer component (B-3) is preferably 0.05 to 10 parts by weight, more preferably 0.1 to 10 parts by weight with respect to 100 parts by weight of (b-3-1) + (b-3-2). If the polyfunctional monomer (b-3-3) content is less than 0.05 part by weight, there is a tendency that a cross-linked polymer cannot be formed. If the polyfunctional monomer (b-3-3) content exceeds 10 parts by weight, a resulting film tends to have low cracking resistance.

Then, a monomer component (B-4) is polymerized in the presence of the rubber particles (polymerization product of (B-1) + (B-2) + (B-3)) to obtain a graft copolymer. The monomer component (B-4) used in the present invention comprises 40 to 100 wt% of a methacrylate (b-4-1) and 60 to 0 wt% of a monofunctional monomer (b-4-2) copolymerizable therewith. The monomer component (B-4) contains no polyfunctional monomer. The polymerization of the monomer component (B-4) may be performed by using a mixture of all the monomers or may be performed in two or more stages by changing the composition of the monomers. The methacrylate (b-4-1) used here is preferably an alkyl methacrylate. From the viewpoint of polymerizability and cost, the alkyl methacrylate is preferably one having a linear or branched alkyl group containing 1 to 12 carbon atoms. Specific examples of such an alkyl methacrylate include methyl methacrylate, ethyl methacrylate, propyl methacrylate, butyl methacrylate, 2-ethylhexyl methacrylate, octyl methacrylate, methacrylamide,

β-hydroxyethyl methacrylate, dimethylaminoethyl methacrylate, and glycidyl methacrylate. These monomers may be used in combination of two or more of them. The ratio of the amount of the methacrylate (b-4-1) to the total amount of (b-4-1) and (b-4-2) is preferably 40 to 100 wt%, more preferably 70 to 100 wt%, most preferably 80 to 100 wt%. If the weight ratio of the methacrylate (b-4-1) is less than 40 wt%, a resulting film is undesirably poor in surface hardness and transparency.

Further, if necessary, the methacrylate (b-4-1) may be copolymerized with the monofunctional monomer (b-4-2) copolymerizable therewith. An ethylene-based unsaturated monomer copolymerizable with the methacrylate (b-4-1) is, for example, an acrylate, preferably an alkyl acrylate. From the viewpoint of polymerizability and cost, the alkyl acrylate is preferably one having a linear or branched alkyl group containing 1 to 12 carbon atoms. Specific examples of such an alkyl acrylate include methyl acrylate, ethyl acrylate, propyl acrylate, n-butyl acrylate, isobutyl acrylate, t-butyl acrylate, 2-ethylhexyl acrylate, n-octyl acrylate, β-hydroxyethyl acrylate, dimethylaminoethyl acrylate, glycidyl acrylate, acrylamide, and N-methylol acrylamide. Other examples of the ethylene-based unsaturated monomer include: vinyl halides such as vinyl chloride and vinyl bromide; vinyl cyanides such as acrylonitrile and methacrylonitrile; vinyl esters such as vinyl formate, vinyl acetate, and vinyl propionate; aromatic vinyl derivatives such as styrene, vinyl toluene, and α-methylstyrene; vinylidene halides such as vinylidene chloride and vinylidene fluoride; acrylic acid and salts thereof such as acrylic acid, sodium acrylate, and calcium acrylate; and methacrylic acid and salts thereof such as methacrylic acid, sodium methacrylate, and calcium methacrylate. These monomers may be used in combination of two or more of them.

The ratio of the amount of the monomer component (B-1) is preferably 1 to 20 wt%, more preferably 1 to 10 wt% per 100 wt% of the total amount of the monomer components (B-1) to (B-4) ((B-1) + (B-2) + (B-3) + (B-4)). If the weight ratio of the monomer component (B-1) exceeds 20 wt%, there is a case where a resulting film has low surface hardness. The ratio of the amount of the monomer component (B-2) is preferably 5 to 50 wt%, more preferably 5 to 40 wt% per 100 wt% of the total amount of the monomer components (B-1) to (B-4). If the weight ratio of the monomer component (B-2) exceeds 50 wt%, there is a case where a resulting film has low cracking resistance. The ratio of the amount of the monomer component (B-3) is preferably 20 to 70 wt%, more preferably 30 to 60 wt% per 100 wt% of the total amount of the monomer components (B-1) to (B-4). If the weight ratio of the monomer component (B-3) exceeds 70 wt%, there is a case where a resulting film has low surface hardness. The ratio of the amount of the monomer component (B-4) is preferably 20 to 70 wt%, more preferably 20 to 60 wt% per 100 wt% of the total amount of the monomer components (B-1) to (B-4). If the weight ratio of the monomer component (B-4) exceeds 70 wt%, there is a case where a resulting film is poor in cracking resistance.

A rubber-containing graft copolymer (C) used in the present invention is obtained by first polymerizing a monomer component (C-1) to obtain rubber particles. The monomer component (C-1) used in the present invention comprises 50 to 100 wt% of an acrylate (c-1-1), 50 to 0 wt% of a methacrylate (c-1-2), and 0.05 to 10 parts by weight of a polyfunctional monomer (c-1-3) (with respect to 100 parts by weight of (c-1-1) + (c-1-2)). The polymerization of the monomer component (C-1) may be performed by using a mixture of all the monomers or may be performed in two or more stages by changing the composition of the monomers. The acrylate (c-1-1) and the methacrylate (c-1-2) used here may be the same as those used in the polymerization for producing the rubber-containing graft copolymer (B). The ratio of the amount of the acrylate (c-1-1) to the total amount of (c-1-1) and (c-1-2) is preferably 50 to 100 wt%, more preferably 60 to 100 wt%, most preferably 70 to 100 wt%. If the weight ratio of the acrylate (c-1-1) is less than 50 wt%, a resulting film is undesirably poor in cracking resistance.

Then, a monomer component (C-2) is polymerized in the presence of the rubber particles (polymerization product of (C-1)) to obtain a rubber-containing graft copolymer (C). The monomer component (C-2) used in the present invention comprises 50 to 100 wt% of a methacrylate (c-2-1) and 50 to 0 wt% of a monofunctional monomer (c-2-2) copolymerizable therewith. The monomer component (C-2) contains no polyfunctional monomer. The methacrylate (c-2-1) and the monofunctional monomer (c-2-2) copolymerizable therewith used here may be the same as those used in the polymerization for producing the rubber-containing graft copolymer (B). The ratio of the amount of the methacrylate (c-2-1) to the total amount of (c-2-1) and (c-2-2) is preferably 50 to 100 wt%, more preferably 60 to 100 wt%, most preferably 70 to 100 wt%. If the weight ratio of the methacrylate (c-2-1) is less than 50 wt%, a resulting film is undesirably poor in surface hardness and transparency.

A specific example of an acrylic resin (A) used in the present invention is a resin obtained by polymerizing 50 to 100 wt% of a methacrylate and 0 to 50 wt% of a monofunctional monomer copolymerizable therewith. The methacrylate and the monofunctional monomer copolymerizable therewith may be the same as those used as monomers in the polymerization for producing the rubber-containing graft copolymer (B). In the case of the specific example of the acrylic resin (A), the ratio of the amount of the methacrylate to the total amount of the methacrylate and the monofunctional monomer copolymerizable therewith is preferably 50 to 100 wt%, more preferably 60 to 100 wt%, most preferably 70 to 100 wt%. If the weight ratio of the methacrylate is less than 50 wt%, a resulting film is undesirably poor in surface hardness and transparency.

Another specific example of a resin usable as the acrylic resin (A) is an acrylic resin containing a glutarimide structure, a glutaric anhydride structure, a (meth)acrylic acid unit, or a lactone structure in its molecule. Examples of such an acrylic resin include a glutarimide acrylic resin, a glutaric anhydride acrylic resin, and an acrylic resin having a lactone ring structure. The glutarimide acrylic resin improves the heat resistance of a resulting film and allows the film to have excellent optical characteristics by stretching.

It is to be noted that in the present invention, "acrylic resin" is used as a comprehensive term, and therefore includes both narrowly-defined acrylic resin and methacrylic resin.

A method for producing the acrylic resin (A), the rubber-containing graft copolymer (B), and the rubber-containing graft copolymer (C) used in the present invention is not particularly limited, and a known emulsion polymerization method, emulsion-suspension polymerization method, suspension polymerization method, bulk polymerization method, or solution polymerization method is applicable. The rubber-containing graft copolymer (B) and the rubber-containing graft copolymer (C) are particularly preferably produced by an emulsion polymerization method.

A latex obtained by an emulsion polymerization method is subjected to usual operation including coagulation, washing, and drying or to treatment such as spray drying or freeze drying to separate and collect a resin composition.

The average particle size of the rubber particles (rubber particles as a polymerization product of the monomer components (B-1), (B-2), and (B-3)) of the rubber-containing graft copolymer (B) is preferably 0.2 to 0.4 μm, more preferably 0.2 to 0.3 μm. If the average particle size is less than 0.2 μm, a resulting film is undesirably poor in cracking resistance. If the average particle size exceeds 0.4 μm, a resulting film undesirably has low anti-whitening on bending and low transparency.

The average particle size of the rubber particles (rubber particles as a polymerization product of the monomer component (C-1)) of the rubber-containing graft copolymer (C) is preferably 0.02 to 0.15 μm, more preferably 0.02 to 0.13 μm, even more preferably 0.03 to 0.10 μm. If the average particle size is less than 0.02 μm, a resulting film is undesirably poor in cracking resistance. If the average particle size exceeds 0.15 μm, a resulting film undesirably has low anti-whitening on bending and low transparency.

An acrylic resin composition (D) used in the present invention contains the acrylic resin (A), the rubber-containing graft copolymer (B), and if necessary, the rubber-containing graft copolymer (C), that is, contains one or two kinds of rubber-containing graft copolymers. The rubber-containing graft copolymer (B) having a rubber particle size of 0.2 to 0.4 μm makes it possible to improve the cracking resistance and anti-whitening on bending of a resulting film, and the rubber-containing graft copolymer (C), which has a rubber particle size of 0.02 to 0.15 μm and is contained in the acrylic resin composition (D) if necessary, makes it possible to further improve the anti-whitening on bending of the film. The amount of the rubber-containing graft copolymer (B) contained in the acrylic resin composition (D) is set so that the amount of the rubber particles of the rubber-containing graft copolymer (B) is preferably 1 to 30 parts by weight, more preferably 1 to 25 parts by weight, most preferably 1 to 20 parts by weight per 100 parts by weight of the acrylic resin composition (D). If the rubber particle content is less than 1 part by weight, a resulting film is poor in cracking resistance, and if the rubber particle content exceeds 30 parts by weight, a resulting film is poor in surface hardness, transparency, and anti-whitening on bending. The amount of the rubber-containing graft copolymer (C) contained in the acrylic resin composition (D) is set so that the amount of the rubber particles of the rubber-containing graft copolymer (C) is preferably 1 to 50 parts by weight, more preferably 1 to 35 parts by weight, most preferably 1 to 20 parts by weight per 100 parts by weight of the acrylic resin composition (D). If the rubber particle content exceeds 50 parts by weight, a resulting film is poor in surface hardness and transparency.

The acrylic resin composition (D) used in the present invention is particularly useful as a film. For example, the acrylic resin composition (D) is successfully processed into a film by a commonly-used melt extrusion method such as an inflation method or a T-die extrusion method, a calendar method, or a solvent casting method. Further, when the acrylic resin composition (D) is molded into a film, if necessary, both the surfaces of the film may be brought into contact with (inserted between) rolls or metallic belts at the same time, especially with rolls or metallic belts heated to a temperature equal to or higher than the glass transition temperature of the film so that the film can have better surface properties. Further, depending on the intended use, the film may be subjected to lamination molding or modified by uniaxial stretching or biaxial stretching.

Further, if necessary, the acrylic resin composition (D) used in the present invention may be blended with polyglutarimide, a glutaric anhydride polymer, a methacrylic resin having a lactone ring structure, a polyethylene terephthalate resin, a polybutylene terephthalate resin, or the like. A blending method is not particularly limited, and may be a known method.

An acrylic resin film according to the present invention may be an unstretched film not subjected to stretching or a stretched film. When the acrylic resin film according to the present invention is a stretched film, the stretched film (uniaxially-stretched film or biaxially-stretched film) can be produced by once molding the acrylic resin composition (D) used in the present invention into an unstretched film and then subjecting the unstretched film to uniaxial stretching or biaxial stretching.

In this specification, a film obtained by molding the acrylic resin composition (D) used in the present invention but not yet subjected to stretching, that is, an unstretched film is referred to as "raw film" for convenience.

When a raw film is stretched, stretching may be continuously performed immediately after the raw film is obtained by molding, or may be performed after the raw film obtained by molding is once stored or moved. It is to be noted that when a raw film is stretched immediately after obtained by molding, stretching may be performed very shortly (in some cases, instantly) after the raw film is obtained by molding in a film production process, or stretching may be performed after a lapse of a certain time after the raw film is once produced.

When the acrylic resin film according to the present invention is produced as a stretched film, the raw film does not have to be completely in a film state as long as the raw film is in a film state to the extent that it can be stretched.

A method for stretching the raw film is not particularly limited, and may be any conventionally-known stretching method. Specific examples of such a method include transverse stretching with a tenter, longitudinal stretching with rolls, and successive biaxial stretching in which the transverse stretching and longitudinal stretching are successively performed in combination. Alternatively, a simultaneous biaxial stretching method may be used in which transverse stretching and longitudinal stretching are performed at the same time, or a method may be used in which longitudinal stretching with rolls is performed and then transverse stretching with a tenter is performed. The raw film may be previously heated before stretching. In this case, the temperature at which the raw film is heated may be appropriately set.

The temperature at which the raw film is stretched is not particularly limited, and may be changed depending on mechanical strength, surface properties, thickness accuracy, etc. required of a stretched film to be produced. Generally, the stretching temperature is preferably in the range of (Tg - 30°C) to (Tg + 30°C), more preferably in the range of (Tg) to (Tg + 20°C), wherein Tg is the glass transition temperature of the raw film determined by a DSC method. When the stretching temperature is within the above range, a resulting stretched film has a smaller thickness variation and further has excellent mechanical properties such as elongation, tear propagation strength, and folding endurance. Further, the occurrence of trouble, such as sticking of the film to rolls, can be prevented. On the other hand, if the stretching temperature is higher than the above temperature range, a resulting stretched film tends to have a large thickness variation, and its mechanical properties, such as elongation, tear propagation strength, and folding endurance, tend not to be sufficiently improved. Further, trouble such as sticking of the film to rolls is likely to occur. On the other hand, if the stretching temperature is lower than the above temperature range, a resulting stretched film tends to have a high haze, and in an extreme case, a production problem such as tear or breakage of the film tends to occur.

When the raw film is stretched, the stretching ratio of the film is not particularly limited, either, and may be determined depending on mechanical strength, surface properties, thickness accuracy, etc. required of a stretched film to be produced. Depending on the stretching temperature, the stretching ratio is generally preferably selected from the range of 1.1 to 3, more preferably 1.3 to 2.5, even more preferably 1.5 to 2.3. When the stretching ratio is within the above range, it is possible to significantly improve the mechanical properties of the film, such as elongation, tear propagation strength, and folding endurance. Therefore, it is possible to produce a stretched film that has a thickness variation of 5 $\mu$m or less, has a birefringence of substantially zero, and further has a haze of 5% or less.

When being used as a polarizer protective film, the optical film according to the present invention preferably has small optical anisotropy. Particularly, the optical film preferably has small optical anisotropy not only in its in-plane directions (length direction, width direction) but also in its thickness direction. In other words, the in-plane phase difference and the thickness-direction phase difference of the optical film are both preferably small.

More specifically, the in-plane phase difference of the raw film is preferably 10 nm or less, more preferably 5 nm or less, even more preferably 3 nm or less. The in-plane phase difference of the stretched film is preferably 10 nm or less, more preferably 6 nm or less, even more preferably 5 nm or less.

The thickness-direction phase difference of the raw film is preferably 50 nm or less, more preferably 10 nm or less, even more preferably 5 nm or less. The thickness-direction phase difference of the stretched film is preferably 50 nm or less, more preferably 20 nm or less, even more preferably 10 nm or less.

The optical film according to the present invention having such optical characteristics is suitable for use as a polarizer protective film of a polarizer in a liquid crystal display device. If the in-plane phase difference of the film exceeds 10 nm or the thickness-direction phase difference of the film exceeds 50 nm, when a polarizer protective film using the optical film according to the present invention is used for a polarizer in a liquid crystal display device, a problem such as a reduction in the contrast of the liquid crystal display device may occur.

It is to be noted that an in-plane phase difference (Re) and a thickness-direction phase difference (Rth) can be calculated by the following formulas, respectively.

$$Re = (nx - ny) \times d$$

$$Rth = \left| (nx+ny)/2 - nz \right| \times d$$

In the above formulas, nx, ny, and nz represent refractive indexes in X, Y, and Z axis directions, respectively, at the time when a direction in which an in-plane refractive index becomes maximum is defined as an X axis, a direction orthogonal to the X axis is defined as a Y axis, and the thickness direction of a film is defined as a Z axis. Further, d represents the thickness of the film, and || represents an absolute value.

Further, when the optical film according to the present invention is used as a polarizer protective film, the orientation birefringence value of the optical film is preferably 0 to $0.1 \times 10^{-3}$, more preferably 0 to $0.02 \times 10^{-3}$. When the orientation birefringence value is within the above range, birefringence does not occur even when an environmental change occurs during molding processing, and therefore stable optical characteristics can be achieved.

An inorganic pigment or an organic dye for coloring, an antioxidant, a heat stabilizer, an ultraviolet absorber, an ultraviolet stabilizer, or the like for further improving stability to heat or light, or an antimicrobial agent, a deodorant, a lubricant, or the like may be added to the acrylic resin composition (D) used in the present invention singly or in combination of two or more of them.

The thickness of a film obtained from the acrylic resin composition (D) used in the present invention (hereinafter, sometimes referred to as "acrylic resin film according to the present invention") is preferably 30 to 500 $\mu$m, more preferably 30 to 400 $\mu$m, most preferably 30 to 300 $\mu$m. If the thickness of the film is less than 30 $\mu$m, the processability of the film tends to be decreased. If the thickness of the film exceeds 500 $\mu$m, the moldability of the film tends to be decreased.

The acrylic resin film according to the present invention may be used as a base material so that a coating layer is provided on at least one of the surfaces thereof. The type or structure of the coating layer is not particularly limited, and may be arbitrarily selected depending on function required (e.g., improvement in surface hardness, scratch resistance, self-restorability, anti-glare function, anti-reflection function, anti-fingerprint function). However, a coating layer is preferably provided which contains at least one selected from the group consisting of a urethane acrylate-based resin, an acrylate-based resin, an epoxy acrylate-based resin, and a silicone-based resin. This allows the acrylic resin film according to the present invention to have further improved surface hardness while maintaining its cracking resistance and anti-whitening on bending.

The coating layer can be formed by a known method, but is preferably formed by a printing method or a coating method. In this case, a coating liquid (solution or dispersion liquid) for forming the coating layer is prepared, and the coating liquid is applied onto at least one of the surfaces of the acrylic resin film, dried by heating for removing a solvent, and, if necessary, cured by irradiation with electron beams, ultraviolet rays, $\gamma$ rays, or the like so that a hard coating (hard coat layer) can be formed. This method is preferred in that excellent adhesion between the coating layer and the acrylic resin film can be achieved. The conditions of the irradiation are determined depending on the photocurability of the coating layer, but an irradiation dose is usually about 300 to 10,000 mJ/cm$^2$. The surface hardness of the hard coat layer is preferably HB or higher (e.g., HB, H, 2H, 3H).

Examples of the printing method include known printing methods such as gravure printing, screen printing, and offset printing.

Examples of the coating method include known coating methods such as flow coating, spray coating, bar coating, gravure coating, gravure reverse coating, kiss-reverse coating, micro-gravure coating, roll coating, blade coating, rod coating, roll doctor coating, air knife coating, comma roll coating, reverse roll coating, transfer roll coating, kiss roll coating, curtain coating, and dipping coating.

The solvent is preferably a volatile solvent that can dissolve or uniformly disperse the resin used as a coating agent, has no significant adverse effect on the physical properties (e.g., mechanical strength, transparency) of the acrylic resin film from a practical point of view, and has a boiling point that is not 80°C or more higher, preferably not 30°C or more higher than the glass transition temperature of the acrylic resin film.

Examples of the solvent include various known solvents such as alcohol-based solvents such as methanol, ethanol, isopropyl alcohol, n-butanol, and ethylene glycol; aromatic solvents such as xylene, toluene, and benzene; aliphatic hydrocarbon-based solvents such as hexane and pentane; halogenated hydrocarbon-based solvents such as chloroform and carbon tetrachloride; phenol-based solvents such as phenol and cresol; ketone-based solvents such as methyl ethyl ketone, methyl isobutyl ketone, acetone, and cyclohexanone; ether-based solvents such as diethyl ether, methoxytoluene, 1,2-dimethoxyethane, 1,2-dibutoxyethane, 1,1-dimethoxymethane, 1,1-dimethoxyethane, 1,4-dioxane, and tetrahydrofurane (THF); fatty acid-based solvents such as formic acid, acetic acid, and propionic acid; acid anhydride-based solvents such as acetic anhydride; ester-based solvents such as ethyl acetate, n-propyl acetate, butyl acetate, and butyl formate; nitrogen-containing solvents such as ethylamine, toluidine, dimethylformamide, and dimethylacetamide; sulfur-containing solvents such as thiophene and dimethylsulfoxide; and solvents having two or more functional groups such as diacetone alcohol, 2-methoxyethanol (methyl cellosolve), 2-ethoxyethanol (ethyl cellosolve), 2-butoxyethanol (butyl cellosolve), diethylene glycol, 2-aminoethanol, acetone cyanohydrin, diethanolamine, morpholine, 1-acetoxy-2-ethoxyethane, and 2-acetoxy-1-methoxypropane. These solvents may be used singly or in combination of two or more of them.

Among them, a solvent mainly containing ethyl acetate, n-propyl acetate, isopropyl alcohol, methyl ethyl ketone, or methyl isobutyl ketone is preferred because a reduction in the physical properties of the acrylic resin film caused by the solvent can be suppressed. Further, from the viewpoint of adhesion between the coating layer and the acrylic resin film, butyl acetate and methyl isobutyl ketone are preferably used in combination. Also from the viewpoint of uneven luster after coating, a middle-boiling solvent such as butyl acetate or methyl isobutyl ketone and a high-boiling solvent such as 2-acetoxy-1-methoxypropane or cyclohexanone are preferably used in combination.

The coating liquid is preferably filtered to remove foreign matter. The filtration may be performed after the preparation of the coating liquid, or may be performed just before or during coating. The filtration can be performed using a known filtration device, but for example, CUNO filter (trade name) manufactured by Sumitomo 3M Limited is preferably used.

The thickness of the coating layer is preferably 0.1 to 20 μm, and is more preferably 0.1 to 10 μm, most preferably 0.1 to 7 μm because cracking is less likely to occur even when the acrylic resin film is molded into a deep-drawn shape by vacuum molding.

The acrylic resin film according to the present invention may have a primer layer on its surface opposite to the surface on which the hard coat layer is provided. As a composition for forming the primer layer, a resin is used which is excellent in adhesion with an ink for printing or a metal for metal vapor deposition for use in a processing process performed later. Examples of such a resin include urethane-based resins, acrylic resins, polyester-based resins, polycarbonate, epoxy-based resins, and melamine-based resins.

The thickness of the primer layer is preferably 0.1 to 10 μm, more preferably 0.1 to 5 μm, most preferably 0.1 to 3 μm. If the thickness of the primer layer is less than 0.1 μm, the primer layer poorly contributes to adhesion, and if the thickness of the primer layer exceeds 10 μm, cracking occurs during vacuum molding.

Further, if necessary, the surface gloss of the acrylic resin film according to the present invention may be reduced by a known method. For example, this can be achieved by kneading the acrylic resin composition (D) with an inorganic filler or cross-linked polymer particles. Alternatively, the obtained film may be embossed to reduce its surface gloss.

The acrylic resin film according to the present invention may be used by laminating it on a base material such as a metal or plastic. Examples of a method for laminating the film include lamination molding, wet lamination in which an adhesive is applied onto a metal plate, such as a steel plate, and then the film is placed on and bonded to the metal plate by drying, dry lamination, extrusion lamination, and hot melt lamination.

Examples of a method for laminating the film on a plastic part include insert molding or laminate injection press molding in which the film is placed in a mold and then a resin is injected into the mold, and in-mold molding in which the preliminarily-molded film is placed in a mold and then a resin is injected into the mold.

The acrylic resin film according to the present invention can be used for alternatives to painting such as interior materials for cars and exterior materials for cars, building materials such as window frames, bathroom fitments, wallpapers, and floor materials, daily goods, housings for furniture and electric devices, housings for OA equipment such as facsimiles, notebook computers, and copy machines, front panels for liquid crystal displays in terminals such as mobile phones, smartphones, and tablets, films for liquid crystal display members such as polarizer protective films, front panel films, prism bases, and light guide films, and parts of electric or electronic devices. Further, a laminate using the acrylic resin film according to the present invention can be used for lighting lenses, car headlights, optical lenses, optical fibers, optical discs, light guide plates for liquid crystal displays, films for liquid crystal displays, medical supplies requiring sterilization, microwave cooking vessels, housings for home appliances, toys, and recreational goods. Examples

The present invention will be described in more detail based on the following examples, but is not limited to these examples.

It is to be noted that in the following production examples, examples, and comparative examples, "part(s)" and "%" represent part(s) by weight and % by weight, respectively.

Abbreviations for substances are as follows:

BA: butyl acrylate
MMA: methyl methacrylate
St: styrene
CHP: cumene hydroperoxide
AlMA: allyl methacrylate

It is to be noted that in the following examples and comparative examples, measurements of physical properties were performed by the following methods.

(Evaluation of Polymerization Conversion Ratio)

An obtained polymer latex was dried in a hot-air drier at 120°C for 1 hour to determine its solid content, and a polymerization conversion ratio (%) was calculated by 100 × solid content/amount of monomer fed (%).

(Average Particle Size of Rubber Particles)

A compound obtained by blending the rubber-containing graft copolymer (B) (or the rubber-containing graft copolymer (C)) and SUMIPEX EX (manufactured by Sumitomo Chemical Company, Limited) in a ratio of 50 : 50 was molded to obtain a film, and the micrograph of the film was taken by a RuO4 staining and ultrathin sectioning method using a transmission electron microscope (JEM-1200EX manufactured by JEOL Ltd.) at an accelerating voltage of 80 kV. Then, 100 images of rubber particles were randomly selected from the obtained micrograph, and the average of their particle sizes was determined.

(Evaluation of Haze)

The transparency of an obtained film was evaluated by measuring the haze of the film in accordance with JIS K 6714 at a temperature of 23°C ± 2°C and a humidity of 50% ± 5%.

(Evaluation of Pencil Hardness)

The pencil hardness of an obtained film was measured in accordance with JIS K 5600-5-4. When the film had a hard coat layer, the pencil hardness of the surface of the hard coat layer was measured.

(Evaluation of Cracking Resistance)

A film was cut with a utility knife, and the cut surface of the film was evaluated according to the following criteria:

○: the occurrence of cracking was not observed in the cutting surface;
○-: the occurrence of cracking was slightly observed in the cutting surface;
Δ: the occurrence of cracking was observed in the cutting surface; and
x: the occurrence of cracking was significantly observed in the cutting surface.

(Anti-Whitening on Bending)

A film was bent 180 degrees at 23°C and observed to evaluate whether the whitening of the film occurred according to the following criteria:

○: whitening was not observed;
Δ: whitening was slightly observed; and

x: whitening was significantly observed.

(Tensile Elongation at 120°C)

The elongation of a film at 120°C was measured with a tensilon tensile tester equipped with a thermostatic chamber at 120°C. The measurement was performed at a distance between chucks of 50 mm and a tension rate of 200 mm/min to determine the elongation at the time when a coating layer could not follow the elongation of an acrylic resin layer so that cracking occurred in the coating layer.

(Evaluation of Fish-Eyes (Foreign Objects))

The number of fish-eyes (foreign objects) having a size of 50 $\mu$m or more in the surface of an A4-size film was counted at a distance of 30 cm from the film.

(Elongation at Break)

A film having a film thickness of 125 $\mu$m was used. A tensile test was performed in accordance with ISO 527-3 (JIS K 7127) using MD test pieces of type 5 at a test rate of 200 mm/min, a temperature of 23 $\pm$ 2°C, and a humidity of 50 $\pm$ 5%.

(Preparation of Uniaxially-Stretched Film and Measurement of Orientation Birefringence)

A test piece of 25 mm $\times$ 90 mm was cut out from an unstretched raw film having a film thickness of 125 $\mu$m (so that its long side was parallel to MD). The test piece was kept at a temperature of the glass transition temperature of the raw film +30°C for 2 minutes in a state where its both short sides were held, and was then uniaxially stretched twice (also referred to as "stretched 100%") in its length direction at a rate of 200 mm/min (at this time, its both long sides were not fixed). Then, the obtained film was cooled to 23°C, and the central portion of the sample was sampled, and its birefringence (orientation birefringence) was measured using an automatic birefringence meter (KOBRA-WR manufactured by Oji Scientific Instruments) at a temperature of 23 $\pm$ 2°C, a humidity of 50 $\pm$ 5%, a wavelength of 590 nm, and an incident angle of 0°. At the same time, the in-plane phase difference Re and thickness-direction phase difference Rth (incident angle: 40°) of the uniaxially-stretched film were also measured (the in-plane phase difference Re and the thickness-direction phase difference Rth will be described later in detail).

(Orientation Birefringence of Raw Film)

A test piece of 40 mm $\times$ 40 mm was cut out from an unstretched raw film (film thickness: 125 $\mu$m), and its birefringence (orientation birefringence) was measured using an automatic birefringence meter (KOBRA-WR manufactured by Oji Scientific Instruments) at a temperature of 23 $\pm$ 2°C, a humidity of 50 $\pm$ 5%, a wavelength of 590 nm, and an incident angle of 0°. At the same time, the in-plane phase difference Re and thickness-direction phase difference Rth (incident angle: 40°) of the uniaxially-stretched film were also measured (the in-plane phase difference Re and the thickness-direction phase difference Rth will be described later in detail).

(In-Plane Phase Difference Re and Thickness-Direction Phase Difference Rth)

A test piece of 40 mm $\times$ 40 mm was cut out from a raw film or a uniaxially-stretched film. The in-plane phase difference Re of the test piece was measured using an automatic birefringence meter (KOBRA-WR manufactured by Oji Scientific Instruments) at a temperature of 23 $\pm$ 2°C, a humidity of 50 $\pm$ 5%, a wavelength of 590 nm, and an incident angle of 0°.

Three-dimensional refractive indexes nx, ny, and nz were determined from the thickness d of the test piece measured by a digimatic indicator (manufactured by Mitsutoyo Corporation), the refractive index n of the test piece measured by Abbe refractometer (3T manufactured by ATAGO Co., Ltd.), the in-plane phase difference Re of the test piece measured by an automatic birefringence meter at a wavelength of 590 nm, and the phase difference value of the test piece in a 40° inclined direction to calculate the thickness-direction phase difference of the test piece using the formula: Rth = ((nx + ny)/2 - nz) $\times$ d. It is to be noted that the measured value was multiplied by 100 ($\mu$m)/film thickness ($\mu$m) to convert it to a value per 100 $\mu$m thickness.

(Glass Transition Temperature)

The DSC curve of a sample was obtained in the following manner using a differential scanning calorimeter (DSC) SSC-5200 manufactured by Seiko Instruments Inc. The sample was preconditioned by once increasing its temperature to 200°C at a rate of 25°C/min, holding it for 10 minutes, and decreasing it to 50°C at a rate of 25°C/min. Then, the DSC curve of the sample was measured while the temperature of the sample was increased to 200°C at a temperature rise rate of 10°C /min. The integral of the thus obtained DSC curve (DDSC) was determined, and the glass transition temperature of the sample was determined from the maximum point of DDSC.

(Production Example 1)

<Production of Rubber-Containing Graft Copolymer (B1)>

Preparation of Innermost-Layer Polymer: A mixture having the following composition was fed into a glass reactor and heated to 80°C with stirring in a nitrogen stream. Then, a mixed liquid of a monomer component comprising 1.5 parts of methyl methacrylate, 3 parts of n-butyl acrylate, 0.5 part of styrene, and 0.2 part of allyl methacrylate ((B-1) of Production Example 1 in Table 1) and 0.02 part of t-butyl hydroperoxide was added to the reactor to perform polymerization for 60 minutes.

| | |
|---|---|
| Deionized water | 220 parts |
| Boric acid | 0.3 part |
| Sodium carbonate | 0.03 part |
| Sodium N-lauroyl sarcosinate | 0.09 part |
| Sodium formaldehyde sulfoxylate | 0.09 part |
| Disodium ethylenediamine tetraacetate | 0.006 part |
| Ferrous sulfate | 0.002 part |

The polymerization conversion ratio (amount of polymer formed/amount of monomer fed) of the thus obtained innermost-layer cross-linked polymer latex was 98%.

Preparation of Rubber Particles:

The obtained innermost-layer cross-linked polymer latex was kept at 80°C in a nitrogen stream, and 0.1 part of potassium persulfate was added. Then, a mixed liquid of a monomer component comprising 21 parts of methyl methacrylate, 1 part of n-butyl acrylate, and 0.1 part of allyl methacrylate ((B-2) of Production Example 1 in Table 1) and 0.02 part of t-butyl hydroperoxide was continuously added over 70 minutes. After the completion of the addition of the mixed liquid, the resulting mixture was kept for 60 minutes to perform polymerization.

Further, a monomer component comprising 10 parts of styrene, 40 parts of n-butyl acrylate, and 1 part of allyl methacrylate ((B-3) of Production Example 1 in Table 1) was continuously added over 150 minutes. After the completion of the addition of the monomer mixed liquid, the resulting mixture was kept for 90 minutes to obtain a latex of rubber particles.

Preparation of Rubber-Containing Graft Copolymer:

The obtained latex of rubber particles was kept at 80°C, and 0.02 part of potassium persulfate was added. Then, a monomer component comprising 18 parts of methyl methacrylate and 5 parts of n-butyl acrylate ((B-4) of Production Example 1 in Table 1) was continuously added over 1 hour. After the completion of the addition of the monomer mixed liquid, the resulting mixture was kept for 90 minutes to obtain a rubber-containing graft copolymer latex. The polymerization conversion ratio was 99%.

The obtained rubber-containing graft copolymer latex was salted-out with magnesium sulfate, coagulated, heat-treated, and dried to obtain a white powder of rubber-containing graft copolymer (B1).

(Production Examples 2 to 4)

Rubber-containing graft copolymers (B2) to (B4) were obtained in the same manner as in Production Example 1 except that the compositions of the monomer components (B-1) to (B-4) were changed as shown in Table 1. It is to be noted that in Production Example 3, the amount of sodium N-lauroyl sarcosinate was changed to 0.18 part to obtain (B3).

[Table 1]

| | | | Production Examples | | | |
|---|---|---|---|---|---|---|
| | | | 1 | 2 | 3 | 4 |
| Rubber-containing graft copolymer | | | B1 | B2 | B3 | B4 |
| Monomer mixture (part(s)) | (B-1) | MMA | 1.5 | - | 1.5 | 1.5 |
| | | BA | 3 | - | 3 | 3 |
| | | St | 0.5 | - | 0.5 | 0.5 |
| | | AIMA | 0.2 | - | 0.2 | 0.2 |
| | (B-2) | MMA | 21 | 23 | 21 | 21 |
| | | BA | 1 | 4 | 1 | 1 |
| | | AIMA | 0.1 | 0.1 | 0.1 | 0.1 |
| | (B-3) | St | 10 | 10 | 10 | 10 |
| | | BA | 40 | 40 | 40 | 40 |
| | | AIMA | 1 | 1 | 1 | 1 |
| | (B-4) | MMA | 18 | 18 | 18 | 5 |
| | | BA | 5 | 5 | 5 | 18 |
| Rubber particle size (μm) | | | 0.25 | 0.25 | 0.13 | 0.25 |

(Production Example 5)

<Production of Rubber-Containing Graft Copolymer (C1)>

The following materials were fed into a polymerization apparatus having a capacity of 8 liters and equipped with a stirrer.

| | |
|---|---|
| Deionized water | 200 parts |
| Sodium dioctyl sulfosuccinate | 0.25 part |
| Sodium formaldehyde sulfoxylate | 0.15 part |
| Disodium ethylenediamine tetraacetate | 0.001 part |
| Ferrous sulfate | 0.00025 part |

Air in the polymerization apparatus was sufficiently purged with nitrogen gas so that there was virtually no oxygen in the polymerization apparatus. Then, the temperature in the polymerization apparatus was adjusted to 60°C, and a mixed liquid of a monomer component comprising 27 parts of n-butyl acrylate, 3 parts of methyl methacrylate, and 5 parts of allyl methacrylate and 0.2 part of cumene hydroperoxide was continuously added over 3 hours. After the completion of the addition, polymerization was further continued for 0.5 hour to obtain rubber particles (polymerization product of (C-1)). The polymerization conversion ratio was 99.5%.

Then, 0.05 part of sodium dioctyl sulfosuccinate was fed, and then the temperature in the polymerization apparatus was adjusted to 60°C. A mixed liquid of a monomer component comprising 7 parts of n-butyl acrylate and 63 parts of methyl methacrylate and 0.2 part of cumene hydroperoxide was continuously added over 5 hours. Polymerization was further continued for 1 hour to obtain a rubber-containing graft copolymer latex. The polymerization conversion ratio was 98.5%. The obtained latex was salted-out with calcium chloride, coagulated, washed with water, and dried to obtain a white powder of rubber-containing graft copolymer (C1).

The average particle size of rubber particles of the rubber-containing graft copolymer (C1) was 0.08 μm.

(Examples 1 to 3 and Comparative Examples 1 to 4)

The obtained resin powders of rubber-containing graft copolymers (B) and (C) and SUMIPEX EX (manufactured by Sumitomo Chemical Company, Limited as a methacrylate-based resin containing 95 wt% of methyl methacrylate and 5 wt% of methyl acrylate) were blended so that the numbers of parts of rubber particles of the rubber-containing graft copolymers (B) and (C) were as shown in Table 2 and that the total amount of the rubber-containing graft copolymers (B) and (C) and SUMIPEX EX was 100 parts, and the resulting mixture was mixed with a mixer (SUPERFLOATER SFC-50 manufactured by KAWATA MFG Co., Ltd.) for 3 minutes. Then, the resulting mixture was melt-kneaded using a 40 mmφ single screw extruder equipped with a vent at a cylinder temperature of 240°C to obtain pellets. The obtained pellets were molded using a 40 mmφ extruder equipped with a T die (NEX040397 manufactured by Nakamura Sanki K.K.) at a die temperature of 240°C to obtain a film having a thickness of 125 μm.

Various properties of the obtained film were evaluated, and the results of the evaluations are shown in Table 2.

[Table 2]

|  |  | Examples | | | Comparative Examples | | | |
|---|---|---|---|---|---|---|---|---|
|  |  | 1 | 2 | 3 | 1 | 2 | 3 | 4 |
| Rubber-containing graft copolymer (B) | | B1 | B1 | B1 | B2 | - | B3 | B4 |
| Rubber-containing graft copolymer(C) | | - | C1 | C1 | - | C1 | - | - |
| Number of parts of rubber particles | Rubber-containing graft copolymer (B) | 12 | 9 | 5 | 12 | 0 | 12 | 12 |
|  | Rubber-containing graft copolymer(C) | 0 | 3 | 15 | 0 | 20 | 0 | 0 |
| Cracking resistance | | ○ | ○- | △ | ○- | × | △ | ○ |
| Pencil hardness | | HB | HB | B | HB | HB | HB | 2B |
| Anti-whitening on bending | | △ | ○ | ○ | △ | ○ | △ | △ |
| Haze | | 0.8 | 0.7 | 0.8 | 0.8 | 0.7 | 0.7 | 2.1 |
| Elongation at break | | 30 | 40 | 50 | 30 | 15 | 15 | 35 |
| Fish-eyes | | 402 | 454 | 478 | 712 | 512 | 414 | 434 |

(Examples 4 to 6 and Comparative Examples 5 to 8)

RC29-124 (manufactured by DIC Corporation as a urethane acrylate-based resin dispersion liquid with a solid content concentration of 30%) was applied onto each of the films obtained in Examples 1 to 3 and Comparative Examples 1 to 4 with a bar coater (#6 or #10). After the completion of the coating operation, the film was dried at 80°C for 1 min to volatilize a solvent and irradiated with ultraviolet rays at 748.4 mJ/cm$^2$ to form a coating layer (hard coat layer) with a thickness of 4 μm or 7 μm. Various properties of the obtained film were evaluated, and the results of the evaluations are shown in Table 3. The pencil hardness was determined by measuring the pencil hardness of the surface of the hard coat layer.

[Table 3]

| | Examples | | | Comparative Examples | | | |
|---|---|---|---|---|---|---|---|
| | 4 | 5 | 6 | 5 | 6 | 7 | 8 |
| Base film | Example 1 | Example 1 | Example 2 | Comparative Example 1 | Comparative Example 2 | Comparative Example 3 | Comparative Example 4 |
| Film thickness of coating layer (pm) | 4 | 7 | 4 | 4 | 4 | 4 | 4 |
| Cracking resistance | ○ | ○ | Δ | ○- | × | Δ | ○ |
| Pencil hardness | H | 2H | H | H | H | H | HB |
| Anti-whitening on bending | Δ | Δ | ○ | Δ | ○ | Δ | Δ |
| Haze | 0.4 | 0.4 | 0.4 | 0.5 | 0.5 | 0.5 | 1.5 |
| Tensile elongation at 120°C (%) | 30 | 20 | 30 | 30 | 30 | 30 | 30 |

(Production Example 6)

<Production of Acrylic Resin (A2)>

A glutarimide acrylic resin (A2) was produced using polymethyl methacrylate as a raw material resin and monomethylamine as an imidization agent.

In this production, a tandem-type reactive extruder was used, in which two extrusion reactors were arranged in series. The tandem-type reactive extruder had a first extruder and a second extruder, and both the extruders were intermeshing corotating twin screw extruders having a diameter of 75 mm and an L/D ratio (ratio of length L to diameter D of extruder) of 74. The raw material resin was supplied through the raw material supply port of the first extruder using a loss-in-weight feeder (manufactured by KUBOTA Corporation).

The pressure in each of the vents of the first and second extruders was reduced to -0.095 MPa. Further, the first extruder was connected to the second extruder through a pipe having a diameter of 38 mm and a length of 2 m, and a constant flow pressure valve was used as a system for controlling the pressure in a part connecting the resin discharge port of the first extruder to the raw material supply port of the second extruder. The resin (strand) discharged from the second extruder was cooled on a cooling conveyor and then cut into pellets by a pelletizer. In order to adjust the pressure in the part connecting the resin discharge port of the first extruder to the raw material supply port of the second extruder or to detect varying extrusion, resin-pressure meters were provided at the discharge port of the first extruder, the center of the part connecting the first and second extruders, and the discharge port of the second extruder.

In the first extruder, an imide resin intermediate 1 was produced using polymethyl methacrylate (Mw: 105000) as a raw material resin and monomethylamine as an imidization agent. At this time, the temperature of maximum temperature portion of the extruder was 280°C, the screw rotation speed of the extruder was 55 rpm, the supply rate of the raw material resin was 150 kg/hr, and the amount of monomethylamine added was 2.0 parts with respect to 100 parts of the raw material resin. The constant flow pressure valve was provided just before the raw material supply port of the second extruder to adjust the pressure in the monomethylamine injection portion of the first extruder to 8 MPa.

In the second extruder, the remaining imidization agent and a by-product were devolatilized through a rear vent and a vacuum vent, and then dimethyl carbonate was added as an esterification agent to produce an imide resin intermediate 2. At this time, the temperature of each barrel of the extruder was 260°C, the screw rotation speed of the extruder was 55 rpm, and the amount of dimethyl carbonate added was 3.2 parts with respect to 100 parts of the raw material resin. Further, the esterification agent was removed through a vent, and then the resin was extruded through a strand die, cooled in a water bath, and pelletized by a pelletizer to obtain a glutarimide acrylic resin (A2).

(Examples 7 to 9 and Comparative Examples 9 and 10)

The obtained resin powder of rubber-containing graft copolymer (B) and an acrylic resin (A) were blended so that the number of parts of rubber particles of the rubber-containing graft copolymer (B) was as shown in Table 4 and that the total amount of the rubber-containing graft copolymer (B) and the acrylic resin (A) was 100 parts, and the resulting mixture was mixed with a mixer (SUPERFLOATER SFC-50 manufactured by KAWATA MFG Co., Ltd.) for 3 minutes. Then, the resulting mixture was melt-kneaded using a 40 mmφ single screw extruder equipped with a vent at a cylinder temperature of 240°C to obtain pellets. The obtained pellets were molded using a 40 mmφ extruder equipped with a T die (NEX040397 manufactured by Nakamura Sanki K.K.) at a die temperature of 240°C to obtain a film having a thickness of 125 μm. The obtained film was used as a raw film to form a uniaxially-stretched film by the above-described method. The properties of the obtained uniaxially-stretched film were evaluated, and the results of the evaluations are shown in Table 4.

It is to be noted that in Examples 7 and 8, the following acrylic resin (A1) was used as the acrylic resin (A).

HR-S (manufactured by KURARAY CO., LTD. as a methacrylate-based resin containing 98 wt% of methyl methacrylate and 2 wt% of methyl acrylate)

[Table 4]

|  | Examples | | | Comparative Examples | |
|---|---|---|---|---|---|
|  | 7 | 8 | 9 | 9 | 10 |
| Acrylic resin (A) | A1 | A1 | A2 | A2 | A1 |
| Rubber-containing graft copolymer | B1 | B1 | B1 | - | C1 |

(continued)

| | | Examples | | | Comparative Examples | |
|---|---|---|---|---|---|---|
| | | 7 | 8 | 9 | 9 | 10 |
| Number of parts of rubber particles | Rubber-containing graft copolymer (B) | 4 | 6 | 6 | 0 | 0 |
| | Rubber-containing graft copolymer(C) | 0 | 0 | 0 | 0 | 6 |
| Cracking resistance | | ○ | ○ | ○ | × | Δ |
| Pencil hardness | | F | F | F | H | F |
| Haze | | 0.5 | 0.9 | 0.9 | 0.4 | 0.4 |
| Glass transition temperature | | 119 | 119 | 125 | 125 | 119 |
| Unstretched | Orientation birefringence ($\times 10^{-4}$) | 0.16 | -0.11 | -0.06 | 0.01 | 0.01 |
| | Re (nm) | 0.54 | 0.44 | 0.26 | 0.1 | 0.4 |
| | Rth(nm) | 2.68 | -0.1 | 1.06 | 0.3 | 2.1 |
| Uniaxially-stretched | Orientation birefringence ($\times 10^{-4}$) | 0.19 | 0.14 | 0.11 | 0.14 | 0.14 |
| | Re (nm) | 0.58 | 0.46 | 0.36 | 1.5 | 0.6 |
| | Rth(nm) | 4.66 | 3.7 | 2.02 | 0.3 | 3.9 |

**Claims**

1. An acrylic resin film obtained by forming, into a film, an acrylic resin composition (D) containing an acrylic resin (A) and a rubber-containing graft copolymer (B),
the rubber-containing graft copolymer (B)
being obtained by polymerizing monomer components (B-1) to (B-4) in order so that rubber particles as a polymerization product of (B-1), (B-2), and (B-3) have an average particle size of 0.2 to 0.4 μm,
the monomer component (B-1) comprising 40 to 100 wt% of an acrylate (b-1-1), 60 to 0 wt% of a monofunctional monomer (b-1-2) copolymerizable therewith, and 0.05 to 10 parts by weight of a polyfunctional monomer (b-1-3) (with respect to 100 parts by weight of (b-1-1) + (b-1-2)),
the monomer component (B-2) comprising 50 to 100 wt% of a methacrylate (b-2-1), 50 to 0 wt% of a monofunctional monomer (b-2-2) copolymerizable therewith, and 0.05 to 10 parts by weight of a polyfunctional monomer (b-2-3) (with respect to 100 parts by weight of (b-2-1) + (b-2-2)),
the monomer component (B-3) comprising 50 to 100 wt% of an acrylate (b-3-1), 50 to 0 wt% of a monofunctional monomer (b-3-2) copolymerizable therewith, and 0.05 to 10 parts by weight of a polyfunctional monomer (b-3-3) (with respect to 100 parts by weight of (b-3-1) + (b-3-2)), and
the monomer component (B-4) comprising 40 to 100 wt% of a methacrylate (b-4-1) and 60 to 0 wt% of a monofunctional monomer (b-4-2) copolymerizable therewith.

2. The acrylic resin film according to claim 1, wherein the acrylic resin composition (D) contains 1 to 30 parts by weight of the rubber particles (polymerization product of the monomer components (B-1) + (B-2) + (B-3)) of the rubber-containing graft copolymer (B) per 100 parts by weight of the acrylic resin composition (D).

3. The acrylic resin film according to claim 1 or 2, wherein the acrylic resin composition (D) further contains a rubber-containing graft copolymer (C),
the rubber-containing graft copolymer (C)
being obtained by polymerizing monomer components (C-1) and (C-2) in order so that rubber particles as a polymerization product of (C-1) have an average particle size of 0.02 to 0.15 μm,
the monomer component (C-1) comprising 50 to 100 wt% of an acrylate (c-1-1), 50 to 0 wt% of a methacrylate (c-1-2), and 0.05 to 10 parts by weight of a polyfunctional monomer (c-1-3) (with respect to 100 parts by weight of (c-1-1) + (c-1-2)), and
the monomer component (C-2) comprising 50 to 100 wt% of a methacrylate (c-2-1) and 50 to 0 wt% of a monofunctional monomer (c-2-2) copolymerizable therewith.

4. The acrylic resin film according to claim 3, wherein the acrylic resin composition (D) contains 1 to 30 parts by weight of the rubber particles (polymerization product of the monomer components (B-1) + (B-2) + (B-3)) of the rubber-containing graft copolymer (B) and 1 to 50 parts by weight of the rubber particles (polymerization product of the monomer component (C-1)) of the rubber-containing graft copolymer (C) per 100 parts by weight of the acrylic resin composition (D).

5. The acrylic resin film according to any one of claims 1 to 4, which has a film thickness of 30 to 500 μm.

6. The acrylic resin film according to any one of claims 1 to 5, which has a coating layer on its at least one surface.

7. The acrylic resin film according to any one of claims 1 to 5, which has a hard coat layer on its one surface and has a primer layer on its surface opposite to the one surface.

8. The acrylic resin film according to claim 7, wherein the hard coat layer has a surface hardness of HB or higher.

9. A laminate obtained by laminating the acrylic resin film according to any one of claims 1 to 8 on a base material.

10. An optical film comprising the acrylic resin film according to any one of claims 1 to 8.

11. A polarizer protective film comprising the acrylic resin film according to any one of claims 1 to 10.

## INTERNATIONAL SEARCH REPORT

International application No.

PCT/JP2013/005391

A. CLASSIFICATION OF SUBJECT MATTER
*C08L33/10*(2006.01)i, *C08F265/06*(2006.01)i, *C08J5/18*(2006.01)i, *C08J7/04*
(2006.01)i, *C08L51/04*(2006.01)i, *G02B1/10*(2006.01)i, *G02B5/30*(2006.01)i

According to International Patent Classification (IPC) or to both national classification and IPC

B. FIELDS SEARCHED

Minimum documentation searched (classification system followed by classification symbols)
C08L33/10, C08F265/06, C08J5/18, C08J7/04, C08L51/04, G02B1/10, G02B5/30

Documentation searched other than minimum documentation to the extent that such documents are included in the fields searched
Jitsuyo Shinan Koho          1922-1996     Jitsuyo Shinan Toroku Koho     1996-2013
Kokai Jitsuyo Shinan Koho    1971-2013     Toroku Jitsuyo Shinan Koho     1994-2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 62-041241 B2   (E.I. Du Pont de Nemours &<br>Co.),<br>02 September 1987 (02.09.1987),<br>claims; page 5, left column, lines 2 to 5;<br>examples<br>& JP 55-94917 A          & US 4180529 A<br>& GB 2039496 A          & DE 2918265 A<br>& FR 2446296 A          & NL 7907194 A<br>& IT 1202925 B | 1-2,5-11<br>3-4 |
| Y | JP 2005-200502 A  (Mitsubishi Rayon Co., Ltd.),<br>28 July 2005 (28.07.2005),<br>claims<br>(Family: none) | 3-4 |

☒ Further documents are listed in the continuation of Box C.        ☐ See patent family annex.

| | |
|---|---|
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>    08 October, 2013 (08.10.13) | Date of mailing of the international search report<br>    15 October, 2013 (15.10.13) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2013/005391

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2005-162934 A  (Mitsubishi Rayon Co., Ltd.), 23 June 2005 (23.06.2005), claims; paragraphs [0031] to [0057], [0116] to [0117] (Family: none) | 1-11 |
| A | JP 10-045854 A  (Mitsubishi Rayon Co., Ltd.), 17 February 1998 (17.02.1998), claims; paragraphs [0069] to [0082] (Family: none) | 1-11 |
| A | JP 63-132956 A  (Mitsubishi Monsanto Chemical Co.), 04 June 1988 (04.06.1988), claims; page 10, lower right column, line 2 to page 12, upper left column, line 14 (Family: none) | 1-11 |
| A | JP 59-124916 A  (Mitsubishi Rayon Co., Ltd.), 19 July 1984 (19.07.1984), claims; page 7, lower left column, line 16 to page 8, upper left column, line 15; page 8, upper right column, line 17 to page 9, upper left column, line 11 & JP 3-163152 A | 1-11 |

Form PCT/ISA/210 (continuation of second sheet) (July 2009)

**EP 2 896 652 A1**

**REFERENCES CITED IN THE DESCRIPTION**

**Patent documents cited in the description**

- JP 8323934 A
- JP 10279766 A
- JP 10306192 A
- JP 4291994 B
- JP 2002309059 A
- JP 3835275 B